# EUROPEAN PATENT SPECIFICATION

(11) **EP 1 798 168 B1**
(45) Date of publication and mention of the grant of the patent: **04.06.2008**
(21) Application number: 06122974.6
(22) Date of filing: 26.10.2006
(51) Int. Cl.: B65G 21/18

(54) **Supporting installation**
Stützinstallation
Installation de support

(30) Priority: 15.12.2005 SE 0502787
(43) Date of publication of application: 20.06.2007
(73) Proprietor: FMC FoodTech AB, 251 09 Helsingborg (SE)
(72) Inventor: Malmberg, Jonny, 252 23, Helsingborg (SE); Olsson, Lennart, 260 41, Nyhamnsläge (SE)
(74) Representative: Andersson, Mikael Per Robert

(56) References cited:
- EP-A1- 0 110 856
- WO-A-90/01011
- US-A1- 4 899 871

## Description

### Field of the Invention

The present invention relates to a supporting installation according to the preamble of claim 1.

### Background Art

Supporting installations of the above type are used, for instance, in the food industry to support conveyor belts in compact air treatment plants, in which products arranged on the helically travelling conveyor belt are exposed to an airflow. The airflow can be arranged, for instance, to freeze or heat the product.

Air treatment plants of this type thus comprise a conveyor belt and a supporting installation. The conveyor belt is arranged in a helical path, below referred to as a belt pile, the supporting installation being arranged to support the lowermost turn of the belt pile. Relatively great, radially inward and vertically downward forces causing frictional forces are applied to the contact surfaces between the conveyor belt and the supporting installation.

US 4,899,871 discloses a supporting installation The inner and the outer chain are supported by an inner and an outer supporting structure, respectively, via bearing elements in the form of balls, which are arranged in a channel defined by the respective chains and the associated supporting structure and forming a ball race for the balls. The balls act as a ball bearing between the conveyor belt and the supporting structures. The inner chain is substantially identical to the outer chain.

Vertically downward forces exerted by the belt pile on the supporting installation will be transferred from both the inner and the outer chain to the inner and the outer supporting structure, respectively, via the bearing elements.

Radially inward forces exerted by the belt pile on the supporting installation are transferred from the inner chain to the inner bearing structure via the inner bearing elements. For the outer chain, radially inward forces are transferred to the outer supporting structure via a sliding strip of the same.

A supporting installation is also known from SE 521, 775, in which the bearing elements are in the form of rolls which are alternately arranged in a first and a second orientation.

In some cases, friction may cause problems in these prior-art supporting installations. This is a drawback especially in connection with great belt pile weights, and it is particularly the engagement of the outer chain with said sliding strip which results in loss due to friction.

In these prior-art supporting installations, there is also a risk of the chains tilting. The weight of the belt stack is in fact transferred eccentrically relative to the bearing elements, which means that the chain links are subjected to a torque which strives to tilt the links. For this reason, the chains conventionally comprise flanges which engage a sliding strip of the respective supporting structures in order to counteract said torque. This engagement results in turn in additional loss due to friction between the chains and the associated supporting structures.

It will be appreciated that loss due to friction causes limitations of the weight of the belt pile. Loss due to friction also results in wear on the chains, which in turn requires maintenance work in the form of repair and exchange of chain.

There is thus a need for a supporting installation which in a better way is capable of supporting a belt pile.

WO 90/01011 discloses a conveyor comprising an endless helically extending conveyor belt and a support installation supporting the lowermost of the helically extending turns of the conveyor belt. The support structure comprises an inner and an outer chain are supported by an inner and an outer supporting structure, respectively, via bearing elements in the form of balls, which are arranged in a channel defined by the respective chains and the associated supporting structure and forming a ball race for the balls. The balls act as a ball bearing between the conveyor belt and the supporting structures. The inner chain is substantially identical to the outer chain. The conveyor further comprises a second conveyor belt which is arranged alternating with the first conveyor belt. WO 90/01011 discloses a supporting installation according to the preamble of claim 1.

### Summary of the Invention

In view of that stated above, a first object of the present invention is to provide a supporting installation for supporting a number of turns extending helically one above the other in a belt pile and included in an at least partly self-supporting conveyor belt, in which supporting installation the loss due to friction is reduced.

To achieve the above object, and also other objects that will be evident from the following description, a supporting installation is provided according to the present invention with the features defined in claim 1. Embodiments of the supporting installation are defined in claims 2-16.

Thus, according to the present invention, a supporting installation is provided for supporting a number of turns extending helically one above the other in a belt pile and included in an at least partly self-supporting conveyor belt, comprising an inner supporting structure which, together with an inner chain supported by and movable along the same, defines an inner channel, in which one or more inner bearing elements are arranged. The inner chain is adapted to support a radially inner lateral edge of a lowermost turn of said belt pile. The supporting installation further comprises an outer supporting structure which, together with an outer chain supported by and movable along the same, defines an outer channel, in which one or more outer bearing elements are arranged. The outer chain is adapted to support a radially outer lateral edge of said lowermost turn of said belt pile. Said inner and outer bearing elements are arranged for transfer of vertically downward forces from the respective chains to the associated supporting structure, and said inner bearing elements are arranged for transfer of radially inward forces from the inner chain to a radially inner wall of the inner supporting structure. The supporting installation is characterised in that each chain comprises abutment surfaces which form a radially outer side wall of the inner channel and the outer channel, respectively, and that said outer bearing elements are arranged for transfer of radially inward forces from the outer chain to a radially inner wall of the outer supporting structure.

This results in a supporting installation, in which the loss due to friction is reduced. Each chain comprises abutment surfaces which form a radially outside side wall of the associated channel. This means especially that said outer bearing elements can also be used to transfer radially inward forces from the outer chain to the outer supporting structure. This eliminates the need for a sliding strip against which the outer chain abuts, thereby reducing the loss due to friction of the supporting installation. Thus, the inventive supporting installation can manage higher belt pile weights and its chains are also subjected to reduced wear.

Each chain may comprise chain links which are interconnected by pull elements, which pull elements or chain links support said abutment surfaces.

Each chain link may comprise an upper and a lower link plate, which are arranged in parallel and interconnected in a spaced-apart manner by a spacer element arranged at a first lateral edge of the upper link plate, the upper link plate having an overhang projecting relative to the lower link plate, towards a second lateral edge opposite the first lateral edge, and the overhangs of the upper link plates in the chain links of each chain forming a top wall of the associated channel.

Each pull element may comprise a lower and an upper pull plate, two neighbouring chain links being hingedly connected by said pull elements.

The upper pull plates of the pull elements of the inner chain may support said abutment surfaces.

The lower pull plates of the pull elements of the outer chain may support said abutment surfaces.

Each chain may comprise a drive side with which a drive means is engageable to drive the chain, the drive side of the inner chain being oriented radially inwards and the drive side of the outer chain being oriented radially outwards. By the chains being drivable, the conveyor belt can easily be advanced.

The abutment surfaces of the inner chain can be arranged radially outside the drive side of the chain and the abutment surfaces of the outer chain can be arranged radially inside the drive side of the chain.

Said inner and outer bearing elements may comprise balls, rolls or sliding blocks.

If the bearing elements comprise rolls, these can be alternately arranged in a first and a second orientation, the rolls arranged in said first orientation being intended for transfer of forces from each chain to the respective supporting structures in a vertical downward direction, and the rolls arranged in said second orientation being intended for transfer of forces from each chain to the respective supporting structures in a radial inward direction.

The rolls intended for transfer of forces in the vertical downward direction can be positioned in such a manner relative to the associated lateral edge of the lowermost turn of the conveyor belt that the lateral edge is positioned between the ends of the rolls. This results in centring of the belt pile load relative to the bearing elements, which eliminates the tilting tendency of the chains.

The inner and the outer channel may be substantially square in cross-section. Such a cross-section is suited for bearing elements in the form of rolls or sliding blocks.

Alternatively, the inner and the outer channel may be substantially circular in cross-section, which is suited for bearing elements in the form of balls.

### Brief Description of the Drawings

Embodiments of the present invention will now be described by way of example and with reference to the accompanying drawings.

Fig. 1 is a schematic perspective view of a conveyor belt which along part of its extent travels in a helical path.

Fig. 2 is a schematic perspective view of an inner and an outer chain of an inventive supporting installation.

Fig. 3 is a cross-sectional view of an inventive supporting installation which supports a lower turn of a belt pile.

Fig. 4 is a perspective view, in partially exploded form, of a bearing element of an inventive supporting installation.

Fig. 5 is a top plan view of an outer chain of an inventive supporting installation.

Fig. 6 is a top plan view of an inner chain of an inventive supporting installation.

Fig. 7 is a cross-sectional view of an inventive supporting installation according to a second embodiment.

### Description of Embodiments

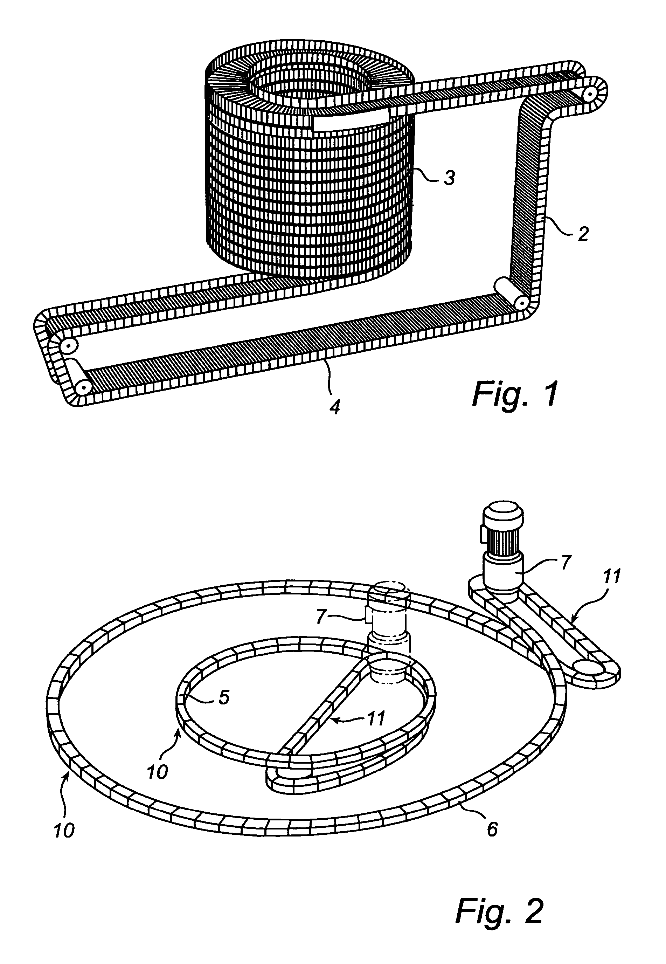

The present invention relates to a supporting installation for a conveyor belt 2 shown in Fig. 1, which along part of its extent comprises a number of turns extending helically one above the other in a belt pile 3. The conveyor belt 2 is endless and extends from the upper end of the belt pile 3 in a path 4 outside the pile 3 to a lower end of the belt pile 3. In operation, the conveyor belt 2 can be driven in any direction, that is the conveyor belt 2 can enter the belt pile 3 either at the upper end or at the lower end.

More specifically, the supporting installation is arranged to support said belt pile 2 and comprises, as schematically shown in Fig. 2, an inner 5 and an outer 6 chain, which are adapted to be arranged under the lowermost turn of the belt pile 3 to support an inner and an outer lateral edge, respectively, of the conveyor belt 2.

As shown in the Figure, the supporting installation may comprise a drive motor assembly 7 which engages the respective chains 5, 6 for driving the conveyor belt 2.

The supporting installation in combination with the conveyor belt is advantageously used in air treatment plants, such as a freezing plant. The supporting installation and the belt pile are then arranged in an enclosing housing through which cold air flows.

The sequence of operations of a freezing plant can be, for instance, such that a food product is placed on the conveyor belt. The product is then supplied to the housing through an inlet and frozen by the cold air while being conveyed in the helical path of the conveyor belt in the housing. When the food product exits the housing, it is removed from the conveyor belt which via a return path is returned to the inlet of the housing.

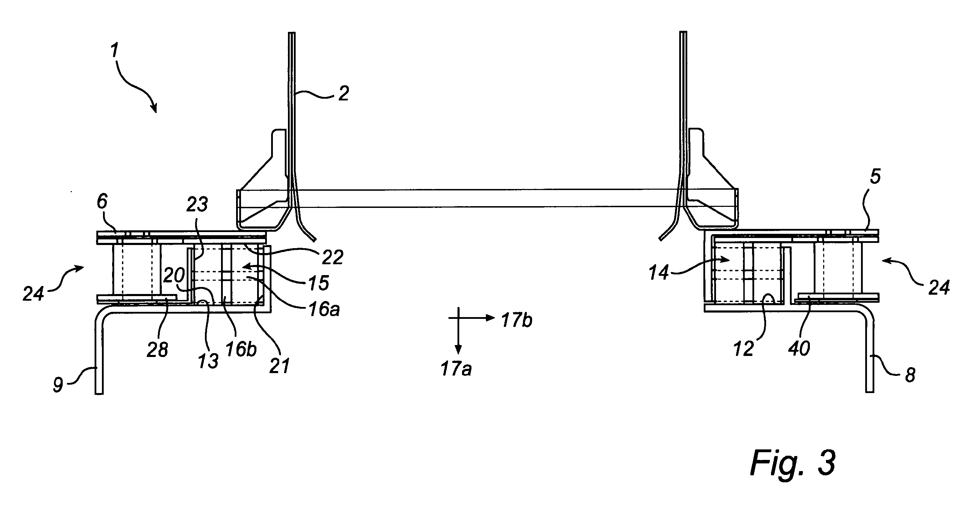

As mentioned above, the supporting installation is arranged to support the belt pile by supporting the lowermost turn. The supporting installation 1 comprises to this end, in addition to said chains 5, 6, also an inner 8 and an outer 9 supporting structure, which is shown in Fig. 3, to which reference is now also made. The supporting structures 8, 9 are each extended along an endless path. The inner chain 5 is supported by and movable along the inner supporting structure 8 and the outer chain 6 is supported by and movable along the outer supporting structure 9. Thus the supporting structures 8, 9 are arranged to support the belt pile 3 via said chains 5, 6.

As mentioned above, the chains 5, 6 are in the embodiment illustrated arranged to drive the conveyor belt 2, and each supporting structure 8, 9 therefore comprises a conveyor belt supporting portion 10 and a return portion 11. The conveyor belt supporting portion 10 of each supporting structure 8, 9 extends substantially along the lateral edge of the lowermost turn of the belt pile 3, which lateral edge each supporting structure 8, 9 is arranged to support via the associated chain 5, 6. As mentioned above, a drive motor assembly 7 is arranged for each chain 5, 6, each drive motor assembly 7 being arranged for driving engagement with the associated chain 5, 6 when this is moved along the associated return path 11.

Each supporting structure 8, 9 defines, together with the associated chain 5, 6, an inner 12 and an outer 13 channel, respectively. The inner channel 12 holds inner bearing elements 14 and the outer channel 13 holds outer bearing elements 15.

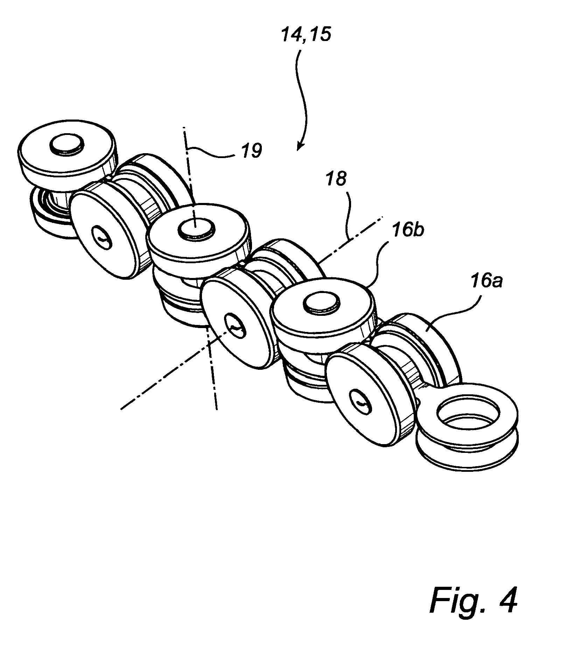

In the embodiment shown, each bearing element 14, 15 is an elongate structure comprising interconnected rolls 16a, 16b which are alternately arranged in a first 17a and a second 17b orientation. Fig. 4 illustrates a partial portion of such a bearing element.

The bearing elements 14, 15 act to transfer vertically downward and radially inward forces, which the belt pile 3 exerts on the chains 5, 6 to the respective supporting structures 8, 9. The rolls 16a arranged in said first orientation 17a can act to transfer vertically downward forces and thus have radially extended longitudinal axes 18, while the rolls 16b arranged in the second orientation 17b can act to transfer radially inward forces and thus have vertically extended longitudinal axes 19. The cooperation between the chains 5, 6, the bearing elements 14, 15 and the supporting structures 8, 9 will be described in more detail below.

The supporting installation 1 can be arranged to support a wholly or partly self-supporting conveyor belt 1.

By a self-supporting conveyor belt is meant that at least one lateral edge of a superjacent turn of the conveyor belt is piled along the distance it extends helically on a corresponding lateral edge of a subjacent turn of the conveyor belt.

The conveyor belt supporting portion 10 of each supporting structure 8, 9 has a pitch and thus takes the shape of a helical turn. Consequently, the belt pile 3 is formed when the opposite lateral edges of the conveyor belt 2 extend along the respective conveyor belt supporting portions 10 of the supporting structures 8, 9. In the shown embodiment, the conveyor belt supporting portions 10 are substantially circular, whereby the formed belt pile 3 takes on a circular cylindrical shape. However, it will be appreciated that the conveyor belt supporting portions can have other shapes, for instance elliptic, whereby the formed belt pile takes on an elliptic cylindrical shape.

The pitch of the conveyor belt supporting portions 10 is such as to correspond to the height of the conveyor belt 2. This means that when the lower turn of the conveyor belt 2 has extended one turn along said conveyor belt supporting portions 10, this turn is piled on a new lowermost turn of the belt pile 3, provided that the conveyor belt 2 is driven in such a direction that it is supplied to the lower end of the belt pile 3.

As mentioned above, both the inner 14 and the outer 15 bearing element act to transfer vertically downward and radially inward forces from the respective chains 5, 6 to the associated supporting structure 8, 9.

Each bearing element 14, 15 is, as mentioned above, arranged in a channel 12, 13 defined by the respective chains 5, 6 and the associated supporting structure 8, 9.

Each channel 12, 13 obtains a bottom wall 20 and a radially inner wall 21 from the supporting structure 8, 9 and a top wall 22 and a radially outer wall 23 from the chain 5, 6. By the bearing elements 14, 15 in the shown embodiment being given the shape of rolls 16a, 16b alternately arranged in said first 17a and second 17b orientation, the channels 12, 13 are square in cross-section.

As shown in Fig. 2, each chain 5, 6 comprises a drive side 24, which is adapted to engage said drive motor assembly 7. For the inner chain 5, said drive side 24 is oriented radially inwards and, for the outer chain 6, said drive side 24 is oriented radially outwards.

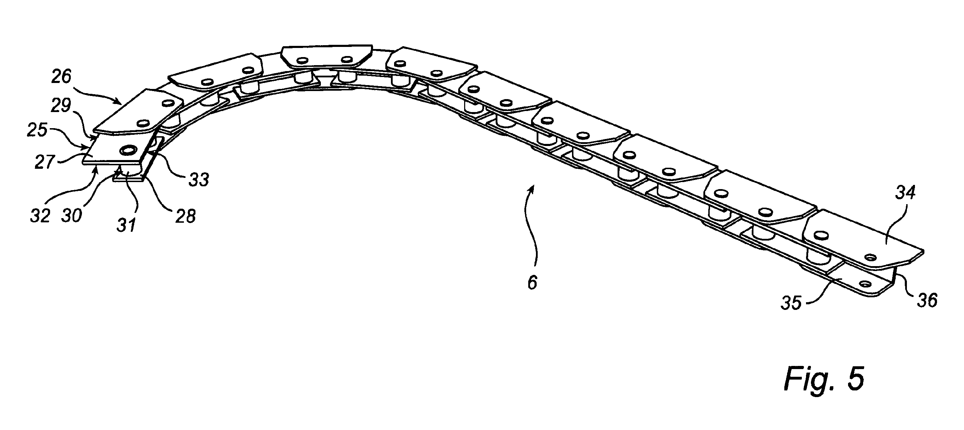

Fig. 5, to which reference is now made, illustrates the outer chain 6 in detail. The outer chain 6 comprises outer chain links 25 which are interconnected by outer pull elements 26.

Each outer chain link 25 comprises an upper 27 and a lower 28 link plate, which are arranged in parallel and interconnected in a spaced-apart manner by a spacer element 30 displaced towards a first lateral edge 29 of the chain 6. The first lateral edge 29 is identical to the drive side 24 of the chain 6. In the shown embodiment, the spacer element 30 comprises two cylindrical bodies 31 which are arranged spaced from each other in the longitudinal direction of the chain 6. The bodies 31 define between them a space, in which teeth of a gear wheel of the drive motor assembly 7 can engage to drive the chain 6.

The upper link plate 27 has an overhang 32 projecting relative to the lower link plate 28, towards a second lateral edge 33 opposite the drive side 24. The overhangs 32 of the chain links 25 form the top wall 22 of the channel 13 for the outer bearing element 15.

In the shown embodiment, the outer chain links 25 are interconnected by outer pull elements 26 which each comprise an upper 34 and a lower 35 pull plate which form a hinged connection between neighbouring chain links 25.

In the embodiment illustrated, the lower pull plate 35 supports a vertically arranged abutment surface 36. The abutment surfaces of the lower pull plates 35 form the radially outer wall 23 of the channel 13 for the outer bearing element 15.

As illustrated in the Figure, the abutment surfaces 36 are thus arranged radially inside the drive side 24 of the chain 6.

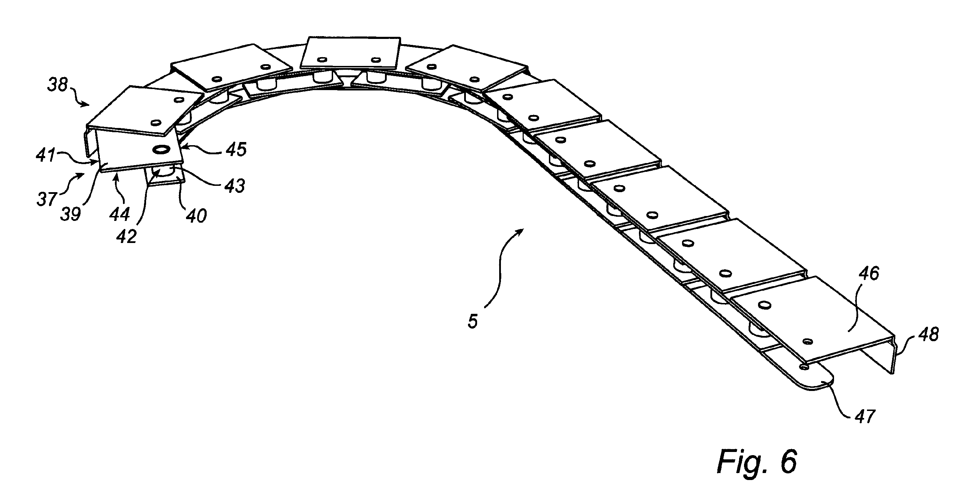

Fig. 6, to which reference is now made, illustrates the inner chain 5 in detail. The inner chain 5 comprises inner chain links 37 which are interconnected by inner pull elements 38.

Each inner chain link 37 comprises an upper 39 and a lower 40 link plate, which are arranged in parallel and connected in a spaced-apart manner by a spacer element 42 displaced towards a first lateral edge 41 of the chain 5. The first lateral edge 21 is identical to the drive side 24 of the chain 5. In the shown embodiment, the spacer element 41 comprises two cylindrical bodies 43 which are spaced from each other in the longitudinal direction of the chain 5. The bodies 43 define between them a space, in which teeth of a gear wheel of the drive motor assembly 7 can engage to drive the chain 5.

The upper link plate 39 has an overhang 44 projecting relative to the lower link plate 40, towards a second lateral edge 45 opposite the drive side 24. The overhangs 44 of the chain links 37 form said top wall 22 of the channel 12 for the inner bearing element 14.

In the embodiment illustrated, the inner chain links 37 are interconnected by inner pull elements 38, which each comprise an upper 46 and a lower 47 pull plate, which form a hinged connection between neighbouring chain links 37.

The upper pull plate 46 supports along said second lateral edge 45 a vertically arranged abutment surface 48. The abutment surfaces 48 of the upper pull plates 46 form the radially outer wall 23 of the channel 12 for the inner bearing element 14.

As shown in the Figure, the abutment surfaces 48 are thus arranged radially outside the drive side 24 of the chain 5.

According to the present invention, both the inner 5 and the outer 6 chain are thus arranged so that the channel 12, 13 defined by the respective chains 5, 6 together with the associated supporting structure 8, 9 has a radially outer wall 23 which is possessed by the chain 5, 6. This means that radially inward forces applied from the belt pile 3 to the respective chains 5, 6 will be transferred from the chain 5, 6 to the associated supporting structure 8, 9 via the bearing element 14, 15 arranged in the respective channels 12, 13. Consequently it is ensured that both the inner and the outer bearing element 14, 15 are used to transfer the radially inward forces. As a result, a considerable reduction of the loss due to friction is provided in the supporting installation 1, which allows increased belt pile weights and also results in reduced wear on the supporting installation 1, above all on its outer chain 6.

As mentioned above, both the inner and the outer bearing element 14, 15 consist in the shown embodiment of rolls 16a, 16b arranged in a first 17a and a second 17b orientation. The channels 13, 14 have been given such a design that the rolls 16a arranged in said first orientation 17a, that is the rolls 16a which are adapted to transfer vertically downward forces, are positioned so that each lateral edge of the conveyor belt 2 is positioned between the ends of the rolls 16a. This ensures that the force exerted by the belt pile 3 on the chains 5, 6 does not strive to tilt the chains.

The present invention has been described above with reference to bearing elements in the form of rolls. However, it will be appreciated that the bearing elements can be given other shapes, and it is thus possible to form the bearing elements in the shape of balls, sliding blocks or combinations thereof.

For instance, it would be possible to form a bearing element from, on the one hand, rolls which are adapted to transfer vertically downward forces and, on the other, sliding blocks which are adapted to transfer radially inward forces.

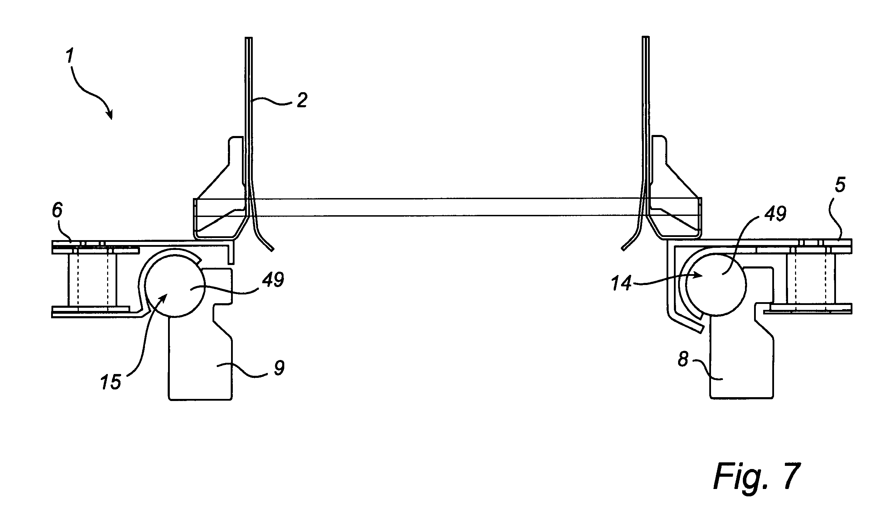

Fig. 7, to which reference is now made, illustrates an embodiment, in which a plurality of bearing elements 14, 15 in the form of balls 49 are arranged in the respective channels 12, 13. The chains 5, 6 and the associated bearing structures 8, 9 have been adjusted so that the channels 12, 13 defined by them are substantially circular in cross-section.

Moreover, the abutment surfaces of the outer chain have been described to be supported by the lower pull plates of the outer pull elements, and the abutment surfaces of the inner chain have been described to be supported by the upper pull plates of the inner pull elements. It will be appreciated that this is a conceivable embodiment of the present invention. It is thus possible, for instance, to let the abutment surfaces of the outer chain be supported by the lower link plates of the outer chain links. It would also be possible to let the abutment surfaces of the inner chain be supported by the upper link plates of the inner chain links.

It will thus be appreciated that several variations and modifications are conceivable, which means that the scope of the present invention is exclusively defined by the appended claims.

## Claims

1. A supporting installation for supporting a number of turns extending helically one above the other in a belt pile (3) and included in an at least partly self-supporting conveyor belt (2), comprising
an inner supporting structure (8) which, together with an inner chain (5) supported by and movable along the same, defines an inner channel (12), in which one or more inner bearing elements (14) are arranged,
which inner chain (5) is adapted to support a radially inner lateral edge of a lowermost turn of said belt pile (3), and
an outer supporting structure (9) which, together with an outer chain (6) supported by and movable along the same, defines an outer channel (13), in which one or more outer bearing elements (15) are arranged,
which outer chain (6) is adapted to support a radially outer lateral edge of said lowermost turn of said belt pile (3),
said inner and outer bearing elements (14; 15) being arranged for transfer of vertically downward forces from the respective chains (5; 6) to the associated supporting structure (8; 9), and
said inner bearing elements (14) being arranged for transfer of radially inward forces from the inner chain (5) to a radially inner wall (21) of the inner supporting structure (8),
**characterised in that**
each chain (5; 6) comprises abutment surfaces (48; 36) which form a radially outer side wall (23) of the inner channel (12) and the outer channel (13) respectively, and
said outer bearing elements (15) are arranged for transfer of radially inward forces from the outer chain (6) to a radially inner wall (21) of the outer supporting structure (9).

2. A supporting installation as claimed in claim 1, in which each chain (5; 6) comprises chain links (37; 25) which are interconnected by pull elements (38; 26), which pull elements (38; 26) or chain links (37; 25) support said abutment surfaces (48; 36).

3. A supporting installation as claimed in claim 2, in which each chain link (37; 25) comprises an upper (39; 27) and a lower (40; 28) link plate, which are arranged in parallel and interconnected in a spaced-apart manner by a spacer element (42; 30) arranged at a first lateral edge (41; 29) of the upper link plate (39; 27), the upper link plate (39; 27) having an overhang (44; 32) projecting relative to the lower link plate (40; 28), towards a second lateral edge (45; 33) opposite the first lateral edge (41; 29), and the overhangs (44; 32) of the upper link plates (39; 27) in the chain links (37; 25) of each chain (5; 6) forming a top wall (22) of the associated channel (12; 13).

4. A supporting installation as claimed in claim 2 or 3, in which each pull element (38; 26) comprises a lower (47; 35) and an upper (46; 34) pull plate, two neighbouring chain links (37; 25) being hingedly connected by said pull elements (38; 26).

5. A supporting installation as claimed in claim 4, in which the upper pull plates (46) of the pull elements (38) of the inner chain (5) support said abutment surfaces (48).

6. A supporting installation as claimed in claim 4 or 5, in which the lower pull plates (35) of the pull elements (26) of the outer chain (6) support said abutment surfaces (36).

7. A supporting installation as claimed in any one of the preceding claims, in which each chain (5; 6) has a drive side (24) with which a drive motor assembly (7) is engageable to drive the chain (5; 6), the drive side (24) of the inner chain (5) being oriented radially inwards and the drive side (24) of the outer chain (6) being oriented radially outwards.

8. A supporting installation as claimed in claim 7, in which the abutment surfaces (48) of the inner chain (5) are arranged radially outside the drive side (24) of the chain (5).

9. A supporting installation as claimed in claim 7 or 8, in which the abutment surfaces (36) of the outer chain (6) are arranged radially inside the drive side (24) of the chain (6).

10. A supporting installation as claimed in any one of the preceding claims, in which said inner and outer bearing elements (14; 15) comprise balls (49).

11. A supporting installation as claimed in any one of the preceding claims, in which said inner and outer bearing elements (14; 15) comprise rolls (16a, 16b).

12. A supporting installation as claimed in claim 11, in which said rolls (16a, 16b) are alternately arranged in a first and a second orientation (17a, 17b), the rolls (16a) arranged in said first orientation (17a) being intended for transfer of forces from each chain (5; 6) to the respective supporting structures (8; 9) in a vertical downward direction and the rolls (16b) arranged in said second orientation (17b) being intended for transfer of forces from each chain (5; 6) to the respective supporting structures (8; 9) in a radially inward direction.

13. A supporting installation as claimed in claim 11, in which the rolls (16a) intended for transfer of forces in the vertical downward direction are positioned in such a manner relative to the respective lateral edges of the lowermost turn of the conveyor belt (2) that the lateral edge is positioned between the ends of each roll (16a).

14. A supporting installation as claimed in any one of the preceding claims, in which said inner and outer bearing elements (14; 15) comprise sliding blocks.

15. A supporting installation as claimed in any one of the preceding claims, in which said first and second channel (12; 13) are substantially square in cross-section.

16. A supporting installation as claimed in any one of claims 1-14, in which said first and inner channel (12; 13) are substantially circular in cross-section.

## Patentansprüche

1. Stützinstallation zum Stützen einer Anzahl von Biegungen, die sich spiralförmig übereinander in einem Bandstapel (3) erstrecken, und in einem zumindest teilweise selbststützender Förderband (2) enthalten sind, umfassend:
eine innere Stützstruktur (8), die, zusammen mit einer inneren Kette (5), die durch die Stützstruktur gestützt wird und sich an dieser entlang bewegt, einen inneren Kanal (12) definiert, in dem ein oder mehrere innere Lagerelemente (14) angeordnet sind,
wobei diese innere Kette (5) dafür eingerichtet ist, eine radial einwärts gelegene seitliche Kante einer untersten Biegung des genannten Bandstapels (3) zu stützen, und
eine äußere Stützstruktur (9), die, zusammen mit einer äußeren Kette (6), die durch die Stützstruktur gestützt wird und sich an dieser entlang bewegt, einen äußeren Kanal (13) definiert, in dem ein oder mehrere äußere Lagerelemente (15) angeordnet sind,
wobei diese äußere Kette (6) dafür eingerichtet ist, eine radial auswärts gelegene seitliche Kante der untersten Biegung des genannten Bandstapels (3) zu stützen,
wobei die genannten inneren und äußeren Lagerelemente (14, 15) für die Übertragung abwärts gerichteter Vertikalkräfte von den entsprechenden Ketten (5, 6) zu der zugehörigen Stützstruktur (8, 9) eingerichtet sind, und
wobei die genannten inneren Lagerelemente (14) für die Übertragung radial einwärts gerichteter Kräfte von der inneren Kette (5) zu einer radial einwärts gelegenen Wand (21) der inneren Stützstruktur (8) eingerichtet sind, **dadurch gekennzeichnet, dass**
jede Kette (5, 6) Anlageflächen (48, 36) umfasst, die eine radial auswärts gelegene Seitenwand (23) des inneren Kanals (12) bzw. des äußeren Kanals (13) bilden, und
die genannten äußeren Lagerelemente (15) für die Übertragung radial einwärts gerichteter Kräfte von der äußeren Kette (6) zu einer radial einwärts gelegenen Wand (21) der äußeren Stützstruktur (9) eingerichtet sind.

2. Stützinstallation nach Anspruch 1, wobei jede Kette (5, 6) durch Zugelemente (38, 26) verbundene Kettenglieder (37, 25) umfasst, wobei die Zugelemente (38, 26) oder die Kettenglieder (37, 25) die genannten Anlageflächen (48, 36) stützen.

3. Stützinstallation nach Anspruch 2, wobei jedes Kettenglied (37, 25) eine obere (39, 27) und eine untere (40, 28) Verbindungsplatte umfasst, die parallel angeordnet und beabstandet durch ein Abstandshalterelement (42, 30) miteinander verbunden sind, wobei das Abstandshalterelement an einer ersten seitlichen Kante (41, 29) der oberen Verbindungsplatte (39, 27) angeordnet ist, und wobei die obere Verbindungsplatte (39, 27) einen Überstand (44, 32) aufweist, der relativ zu der unteren Verbindungsplatte (40, 28) in Richtung auf eine zweite seitliche Kante (45, 33) gegenüber der ersten seitlichen Kante (41, 29) vorsteht, und wobei die Überstände (44, 32) der oberen Verbindungsplatten (39, 27) in den Kettengliedern (37, 25) jeder Kette (5, 6) eine obere Wand (22) des zugehörigen Kanals (12, 13) bilden,

4. Stützinstallation nach Anspruch 2 oder 3, wobei jedes Zugelement (38, 26) eine untere (47, 35) und eine obere (46, 34) Zugplatte umfasst, wobei zwei benachbarte Kettenglieder (37, 25) durch die Zugelemente (38, 26) drehbar verbunden sind.

5. Stützinstallation nach Anspruch 4, wobei die oberen Zugplatten (46) der Zugelemente (38) der inneren Kette (5) die genannten Anlageflächen (48) stützen.

6. Stützinstallation nach Anspruch 4 oder 5, wobei die unteren Zugplatten (35) der Zugelemente (26) der äußeren Kette (6) die genannten Anlageflächen (36) stützen.

7. Stützinstallation nach einem der vorangehenden Ansprüche, wobei jede Kette (5, 6) eine Antriebsseite (24) aufweist, mit der eine Antriebsmotoranordnung (7) eingreifen kann, um die Kette (5, 6) anzutreiben, wobei die Antriebsseite (24) der inneren Kette (5) radial einwärts ausgerichtet ist und die Antriebsseite (24) der äußeren Kette (6) radial auswärts ausgerichtet ist.

8. Stützinstallation nach Anspruch 7, wobei die Anlageflächen (48) der inneren Kette (5) radial außen von der Antriebsseite (24) der Kette (5) angeordnet sind.

9. Stützinstallation nach Anspruch 7 oder 8, wobei die Anlageflächen (36) der äußeren Kette (6) radial innen von der Antriebsseite (24) der Kette (6) angeordnet sind.

10. Stützinstallation nach einem der vorangehenden Ansprüche, wobei die inneren und äußeren Lagerelemente (14, 15) Kugeln (49) aufweisen.

11. Stützinstallation nach einem der vorangehenden Ansprüche, wobei die inneren und äußeren Lagerelemente (14, 15) Rollen (16a, 16b) aufweisen.

12. Stützinstallation nach Anspruch 11, wobei die Rollen (16a, 16b) alternierend mit einer ersten und einer zweiten Ausrichtung (17a, 17b) angeordnet sind, wobei die mit der ersten Ausrichtung (17a) angeordneten Rollen (16a) zur vertikalen Übertragung von Kräften in Abwärtsrichtung von jeder Kette (5, 6) zu den entsprechenden Stützstrukturen (8, 9) gedacht sind, und die mit der zweiten Ausrichtung (17b) angeordneten Rollen (16b) zur radial einwärts gerichteten Kraftübertragung von jeder Kette (5, 6) zu den entsprechenden Stützstrukturen (8, 9) gedacht sind.

13. Stützinstallation nach Anspruch 11, wobei die zur vertikal abwärts gerichteten Kraftübertragung gedachten Rollen (16a) derart relativ zu den entsprechenden seitlichen Kanten der untersten Biegung des Förderbandes (2) angeordnet sind, dass die seitliche Kante zwischen den Enden jeder Rolle (16a) positioniert ist.

14. Stützinstallatlon nach einem der vorangehenden Ansprüche, wobei die inneren und äußeren Lagerelemente (14, 15) Schiebeblöcke enthalten.

15. Stützinstallation nach einem der vorangehenden Ansprüche, wobei der genannte erste und zweite Kanal (12, 13) einen im Wesentlichen quadratischen Querschnitt aufweisen.

16. Stützinstallation nach einem der Ansprüche 1 - 14, wobei der genannte erste und zweite Kanal (12, 13) einen im Wesentlichen kreisförmigen Querschnitt aufweisen.

## Revendications

1. Installation de support pour supporter un certain nombre de tours s'étendant hélicoïdalement les uns au-dessus des autres en un empilement de courroie (3) et compris dans une courroie de transport (2) au moins partiellement auto-porteuse, comprenant :
une structure de support intérieure (8) qui, avec une chaîne intérieure (5) supportée par et mobile le long de la susdite, définit un canal intérieur (12), dans lequel un ou plusieurs éléments de support intérieurs (14) sont agencés,
laquelle chaîne intérieure (5) est adaptée pour supporter un bord latéral radialement intérieur d'un tour inférieur dudit empilement de courroie (3), et
une structure de support extérieure (9) qui, avec une chaîne extérieure (6) supportée par et mobile le long de la susdite, définit un canal extérieur (13), dans lequel un ou plusieurs éléments de support extérieurs (15) sont agencés,
laquelle chaîne extérieure (6) est adaptée pour supporter un bord latéral radialement extérieur dudit tour inférieur dudit empilement de courroie (3),
lesdits éléments de support intérieurs et extérieurs (14 ; 15) étant agencés pour transférer des forces verticalement vers le bas des chaînes (5 ; 6) respectives à la structure de support (8 ; 9) associée, et
lesdits éléments de support intérieurs (14) étant agencés pour transférer des forces radialement vers l'intérieur de la chaîne intérieure (5) à une paroi radialement intérieure (21) de la structure de support intérieure (8),
**caractérisée en ce que**
chaque chaîne (5 ; 6) comprend des surfaces d'appui (48 ; 36) qui forment une paroi latérale radialement extérieure (23) du canal intérieur (12) et du canal extérieur (13), respectivement, et
lesdits éléments de support extérieurs (15) sont agencés pour transférer des forces radialement vers l'intérieur de la chaîne extérieure (6) à une paroi radialement intérieure (21) de la structure de support extérieure (9).

2. Installation de support selon la revendication 1, dans laquelle chaque chaîne (5 ; 6) comprend des maillons de chaîne (37 ; 25) qui sont reliés les uns aux autres par des éléments de traction (38 ; 26), lesquels éléments de traction (38 ; 26) ou maillons de chaîne (37 ; 25) supportent lesdites surfaces d'appui (48 ; 36).

3. Installation de support selon la revendication 2, dans laquelle chaque maillon de chaîne (37 ; 25) comprend des plaques de maillon supérieure (39 ; 27) et inférieure (40 ; 28), qui sont agencées en parallèle et reliées l'une à l'autre en étant espacées par un élément d'espacement (42 ; 30) agencé au niveau d'un premier bord latéral (41 ; 29) de la plaque de maillon supérieure (39 ; 27), la plaque de maillon supérieure (39 ; 27) comportant une partie en surplomb (44 ; 32) faisant saillie par rapport à la plaque de maillon (40 ; 28), vers un deuxième bord latéral (45 ; 33) opposé au premier bord latéral (41 ; 29), et les parties en surplomb (44 ; 32) des plaques de maison supérieures (39 ; 27) dans les maillons de chaîne (37 ; 25) de chaque chaîne (5 ; 6) formant une paroi supérieure (22) du canal (12 ; 13) associé.

4. Installation de support selon la revendication 2 ou 3, dans laquelle chaque élément de traction (38; 26) comprend des plaques de traction inférieure (47; 35) et supérieure (46; 34), deux maillons de chaîne (37 ;25) voisins étant reliés de manière articulée par lesdits éléments de traction (38; 26).

5. Installation de support selon la revendication 4, dans laquelle les plaques de traction supérieures (46) des éléments de traction (38) de la chaîne intérieure (5) supportent lesdites surfaces d'appui (48).

6. Installation de support selon la revendication 4 ou 5, dans les plaques de traction inférieures (35) des éléments de traction (26) de la chaîne extérieure (6) supportent lesdites surfaces d'appui (36).

7. Installation de support selon l'une quelconque des revendications précédentes, dans laquelle chaque chaîne (5 ; 6) comporte un côté d'entraînement (24) avec lequel un ensemble à moteur d'entraînement (7) peut être mis en prise pour entraîner la (5 ; 6), le côté d'entraînement (24) de la chaîne intérieure (5) étant orienté radialement vers l'intérieur et le côté d'entraînement (24) de la chaîne extérieure (6) étant orienté radialement vers l'extérieur.

8. Installation de support selon la revendication 7, dans laquelle les surfaces d'appui (48) de la chaîne intérieure (5) sont agencées radialement à l'extérieur du côté d'entraînement (24) de la chaîne (5).

9. Installation de support selon la revendication 7 ou 8, dans laquelle les surfaces d'appui (36) de la chaîne extérieure (6) sont agencées radialement à l'intérieur du côté d'entraînement (24) de la chaîne (6).

10. Installation de support selon l'une quelconque des revendications précédentes, dans laquelle lesdits éléments de support intérieurs et extérieurs (14 ; 15) comprennent des billes (49).

11. Installation de support selon l'une quelconque des revendications précédentes, dans laquelle lesdits éléments de support intérieurs et extérieurs (14 ; 15) comprennent des rouleaux (16a, 16b).

12. Installation de support selon la revendication 11, dans laquelle lesdits rouleaux (16a, 1 6b) sont agencés de manière alternée dans des première et deuxième orientations (17a, 17b), les rouleaux (16a) agencés dans ladite première orientation (17a) étant destinés au transfert de forces de chaque chaîne (5 ; 6) aux structures de support (8 ; 9) respectives dans une direction verticale vers le bas et les rouleaux (16b) agencés dans ladite deuxième orientation (17b) étant destinés au transfert de forces de chaque chaîne (5 ; 6) aux structures de support (8 ; 9) respectives dans une direction radialement vers l'intérieur.

13. Installation de support selon la revendication 11, dans laquelle les rouleaux (16a) destinés au transfert de forces dans la direction verticale vers le bas sont positionnés de manière à ce que, par rapport aux bords latéraux respectifs du tour inférieur de la courroie de transport (2), le bord latéral soit positionné entre les extrémités de chaque rouleau (16a).

14. Installation de support selon l'une quelconque des revendications précédentes, dans laquelle lesdits éléments de support intérieurs et extérieurs (14 ; 15) comprennent des blocs coulissants.

15. Installation de support selon l'une quelconque des revendications précédentes, dans laquelle lesdits premier et deuxième canaux (12 ; 13) ont une section sensiblement carrée.

16. Installation de support selon l'une quelconque des revendications 1 à 14, dans laquelle lesdits premier et deuxième canaux (12 ; 13) ont une section sensiblement circulaire.
